# EUROPÄISCHE PATENTSCHRIFT

(11) **EP 4 137 406 B1**
(45) Veröffentlichungstag und Bekanntmachung des Hinweises auf die Patenterteilung: **16.10.2024**
(21) Anmeldenummer: 21191972.5
(22) Anmeldetag: 18.08.2021
(51) Int. Cl.: B64D 1/16, A62C 3/02

(54) **MEHRZWECK-PASSAGIERFLUGZEUG, VERWENDUNG DESSELBEN, BETRIEBSVERFAHREN SOWIE PASSAGIERFLUGZEUGBAUREIHE**
MULTI-PURPOSE PASSENGER AIRCRAFT, USE THEREOF, OPERATING METHOD AND PASSENGER AIRCRAFT SERIES
AÉRONEF POLYVALENT DESTINÉ AU TRANSPORT DE PASSAGERS, SON UTILISATION, PROCÉDÉS DE FONCTIONNEMENT, AINSI QUE SÉRIE D'AÉRONEFS DESTINÉS AU TRANSPORT DE PASSAGERS

(43) Veröffentlichungstag der Anmeldung: 22.02.2023
(73) Patentinhaber: Airbus Operations GmbH, 21129 Hamburg (DE)
(72) Erfinder: Wesseloh, Marc, 21129 Hamburg (DE)
(74) Vertreter: KASTEL Patentanwälte PartG mbB

(56) Entgegenhaltungen:
- WO-A2-2005/032937
- JP-A- 2009 107 609
- RU-U1- 4 278
- US-A1- 2021 221 509

## Beschreibung

Die Erfindung betrifft eine Verwendung eines Passagierflugzeug, umfassend eine Passagierkabine mit wenigstens zwanzig Passagiersitzen und ein Frachtdeck. Weiter betrifft die Erfindung eine Passagierflugzeugbaureihe umfassend ein solches Passagierflugzeug. Weiter betrifft die Erfindung ein Verfahren zur Brandbekämpfung.

Zur Begriffsklärung, zum technologischen Hintergrund und zum Stand der Technik wird auf folgende Literaturstellen verwiesen:
[1] A321neo - A320 Family - Airbus, https://www.airbus.com/aircraft/passengeraircraft/a320-family/a321neo.html, heruntergeladen am 10.08.2021
[2] WO 2005/032937 A2
[3] DE 20 2021 000 171 U1
[4] Firefighting Aircraft Recognition Guide, Broschüre des Californian Department of Forestry and Fire Protection, heruntergeladen am 10.08.2021 unter https://www.fire.ca.gov/media/4950/aviation-guide-2019-access.pdf
[5] Unit Load Device - Wikipedia, https://de.wikipedia.org/wiki/Unit_Load_Device, heruntergeladen am 10.08.2021
[6] Additional Center Tanks (ACT) - Webseite von Airbus, heruntergeladen am 11.08.2021, https://services.airbus.com/en/flight-operations/system-upgrades/operationsextension/additional-center-tanks-act.html
[7] Schmalrumpfflugzeug -Wikipedia, https://de.wikipedia.org/wiki/Schmalrumpfflugzeug, heruntergeladen am 11.08.2021
[8] JP 2009 107609 A
[9] US 2021/221509 A1
[10] RU4 278 U1

Aus [1] sind als Schmalrumpfflugzeuge (single aisle) ausgebildete Passagierflugzeuge mit einer Passagierkabine und einem Frachtdeck bekannt. Eine derartige Bauart von Passagierflugzeugen wurde bisher hauptsächlich auf Kurz- oder Mittelstrecken eingesetzt. Wie in [1] beschrieben, können derartige Passagierflugzeuge für verlängerte Reichweite dadurch ausgelegt werden, dass ein zusätzlicher Treibstofftank dauerhaft installiert wird. So weist der A321XLR einen zusätzlichen permanenten Tank im Rumpfbereich hinter den Tragflächen auf, ein weiterer optionaler Tank kann im Rumpfbereich vor den Tragflächen installiert werden. Dadurch steigt die Reichweite auf über 8000 Kilometer an. Aufgrund seiner Anordnung im Rumpfbereich hinter den Tragflächen wird ein derartiger Tank auch als Rear-Center-Tank bezeichnet. Weiter ist aus [6] bekannt, die Reichweite auch durch zusätzliche Zentraltanks - Additional Center Tanks (ACT) - zu verlängern.

Aus [2] sind Luftverteilungssysteme bekannt, mit denen eine schnelle und temporäre Umrüstung von Flugzeugen für die Brandbekämpfung aus der Luft ermöglicht werden kann. Die Luftverteilungssysteme können unter Verwendung modularer Komponenten implementiert werden, die für die Kompatibilität mit herkömmlichen Frachtlade- und -entladesystemen moderner Flugzeuge konfiguriert werden können, einschließlich seitlich ladender Frachtsysteme von Großraum-Passagier- und Frachtflugzeugen mit hohen Tragfähigkeiten. Die Luftverteilungssysteme können schnell in einer großen Flotte von Flugzeugen mit hoher Kapazität installiert werden, um auf einen Waldbrand oder einen anderen sich schnell entwickelnden Notfall wie eine Ölpest, einen Vorfall mit chemischer oder biologischer Kontamination, einen Gebäude- oder Raffineriebrand usw. zu reagieren.

Aus [8] ist eine Verwendung eines Passagierflugzeugs bekannt, bei dem im nicht voll ausgelasteten Passagierbetrieb auch noch ein Aerosol abgegeben wird, welches Sonneneinstrahlung verhindern soll. Als Beispiele hierzu sind feine Sande oder Vulkanasche genannt. Damit soll der Treibhauseffekt vermindert werden. Der Aerosolbehälter hierfür wird innerhalb des Frachtraumes eines ansonsten zum Passagierbetrieb verwendeten Flugzeuges angeordnet.

Aus [9] ist eine Verwendung eines normalen Passagierflugzeuges (z.B. Boeing 747) zur Himmelsbeschriftung bekannt. Hierzu können zentrale Tanks zur Aufnahme von Öl zur Erzeugung von Rauch oder zur Aufnahme von Wasser zum Erzeugen von Wasserdampf angeordnet werden. Düsen zur Abgabe des Rauchs oder des Wasserdampfs sind oberhalb der Tragflächen angeordnet, so dass stets entweder Rauch, Nebel oder Wasserdampf entsteht.

Aus [10] ist ein Wasserflugzeug zur Feuerbekämpfung bekannt. Dabei handelt es sich um ein Kleinflugzeug mit maximal zwei Sitzreihen. Ein Wassertank ist hinter Passagiersitzen als flexibler Balg ausgeführt, so dass der Raum entweder als Frachtraum oder zur Aufnahme des Wassers verwendet werden kann.

Die Erfindung hat sich zur Aufgabe gestellt, erweiterte Einsatzmöglichkeiten eines Passagierflugzeugs der aus [1] bekannten Art bereit zu stellen.

Zum Lösen dieser Aufgabe schafft die Erfindung eine Verwendung eines Passagierflugzeugs gemäß Anspruch 1. Ein Betriebsverfahren eines solchen Passagierflugzeugs und eine Passagierflugzeugbaureihe umfassend ein solches Passagierflugzeug sind Gegenstand der Ansprüche 7 bzw. 10. Vorteilhafte Ausgestaltungen sind Gegenstand der Unteransprüche.

Die Erfindung schafft gemäß einem ersten Aspekt eine Verwendung eines Passagierflugzeugs, umfassend eine Passagierkabine mit wenigstens zwanzig Passagiersitzen und ein Frachtdeck. Das Passagierflugzeug ist ein Typ aus einer Flugzeugbaureihe, die auch ein Langstreckenflugzeug aufweist, bei dem ein dauerhaft zusätzlich installierter Mitteltank zur Reichweitenverlängerung vorgesehen ist. Bei der erfindungsgemäßen Verwendung des Passagierflugzeugs wird der bei anderen Passagierflugzeuges der Passagierflugzeugreihe zur Reichweitenverlängerung dienende Mitteltank als Löschmitteltank (24) verwendet, der somit dauerhaft installierten ist und zur Aufnahme von Löschmittel, insbesondere Löschwasser, zur Brandbekämpfung von Großbränden eingesetzt wird. Hierzu ist bei dem Passagierflugzeug wenigstens eine mit dem Löschmitteltank verbundene Löschmitteldüse zum Verteilen des Löschmittels über dem Großbrand vorgesehen. Es ist bevorzugt, dass der Löschmitteltank unterhalb der Passagierkabine untergebracht ist.

Es ist bevorzugt, dass der Löschmitteltank in einem Bereich eines Rumpfes des Passagierflugzeugs untergebracht ist, der sich von den Flügeln bis zu einem hinteren Frachtraum des Frachtdecks erstreckt.

Es ist bevorzugt, dass der Löschmitteltank ein Tankvolumen von wenigstens 600 I aufweist.

Es ist bevorzugt, dass der Löschmitteltank ein Tankvolumen zwischen 1000 I und 20.000 I aufweist.

Es ist bevorzugt, dass der Löschmitteltank ein Löschwassertank zur Aufnahme von Löschwasser als Löschmittel ist.

Es ist bevorzugt, dass der Löschmitteltank der Rear-Center-Tank des Passagierflugzeugs ist.

Es ist bevorzugt, dass das Frachtdeck mehrere Aufnahmeplätze zur Aufnahme und Verankerung weiterer mobiler Löschmittelcontainer aufweist.

Vorzugsweise sind die Löschmittelcontainer als ACT wie in [6] beschrieben und gezeigt ausgebildet.

Es ist bevorzugt, dass das Frachtdeck mehrere weitere entfernbar verankerte Löschmittelcontainer aufweist, die mit dem Löschmitteltank in Fluidverbindung stehen.

Es ist bevorzugt, dass das Frachtdeck einen vorderen Frachtraum vor dem Löschmitteltank und einen hinteren Frachtraum hinter dem Löschmitteltank aufweist.

Es ist bevorzugt, dass das Frachtdeck zur Aufnahme und Verankerung von einem bis zwanzig Löschmittelcontainer mit je einem Löschmittelvolumen von 400 I bis 4000 I ausgebildet ist.

Es ist bevorzugt, dass das Frachtdeck Löschmittelleitungen aufweist, die an Löschmittelcontainer anschließbar sind und mit dem Löschmitteltank und/oder der Löschmitteldüse verbunden sind.

Es ist bevorzugt, dass die Passagierkabine 21 bis 50 Reihen Passagiersitze aufweist.

Es ist bevorzugt, dass die Passagierkabine als Single-Aisle-Passagierkabine ausgebildet ist.

In einer bevorzugten Ausgestaltung umfasst das Passagierflugzeug wenigstens eine Kamera zur Beobachtung des Bereichs unterhalb des Passagierflugzeugs.

In einer bevorzugten Ausgestaltung umfasst das Passagierflugzeug wenigstens einen Löschsystembediener-Arbeitsplatz für eine Bedienperson mit einer Mensch-Maschine-Schnittstelle zur Bedienung der Löschmitteldüse und/oder von Steuerungen und/oder von Peripheriegeräten des Löschmitteltanks und der Löschmitteldüse.

In einer bevorzugten Ausgestaltung umfasst das Passagierflugzeug eine Pumpeinrichtung zum Transport von Löschmittel von und zu dem Löschmitteltank und/oder zu der wenigstens einen Löschmitteldüse.

Bei einer Ausgestaltung ist die Pumpeinrichtung eine mobile Pumpeinrichtung, die im Falle eines Einsatzes des Passagierflugzeugs zur Brandbekämpfung darin installiert werden kann und für den Normalbetrieb des Passagierflugzeugs am Boden bleiben kann. Bei einer anderen Ausgestaltung ist die Pumpeinrichtung dauerhaft installiert.

Vorzugsweise umfasst die Pumpeinrichtung wenigstens eine Pumpe für das Löschmittel sowie Anschlussleitungen.

In einer bevorzugten Ausgestaltung umfasst das Passagierflugzeug eine Belüftung des Löschmitteltanks zum Nachführen von Luft bei Ablassen des Löschmittels.

In einer bevorzugten Ausgestaltung umfasst das Passagierflugzeug für den Einsatz zur Brandbekämpfung einen oder mehrere als Unit-Load-Device ausgebildete zusätzliche Löschmittelcontainer. Zur Definition von Unit-Load-Device, siehe [5]. Derartige Löschmittelcontainer können unter optimaler Raumausnutzung mit üblichen Frachtladegeräten zur Brandbekämpfung in dem Frachtdeck installiert und für den Normalbetrieb entfernt werden.

In einer bevorzugten Ausgestaltung umfasst das Passagierflugzeug ein Löschmittelleitungssystem mit Rohrleitungen und Ventilen zum Ablassen von Löschmittel und zum Befüllen des Löschmitteltanks.

In einer bevorzugten Ausgestaltung umfasst das Passagierflugzeug eine Heizeinrichtung für den Löschmitteltank. Damit lässt sich auch bei Flug in größeren Höhen oder bei niedrigen Temperaturen eine Eisbildung in dem Löschwassertank beim Flug zur Einsatzstelle vermeiden.

In einer bevorzugten Ausgestaltung umfasst das Passagierflugzeug ein Flüssigkeitsbefüllsystem zum Befüllen des Löschmitteltanks.

In einer bevorzugten Ausgestaltung umfasst das Passagierflugzeug ein Luftdrucksystem zum Steuern des Drucks in dem Löschmitteltank. Vorzugsweise ist das Luftdrucksystem zur Erhöhung des Drucks durch Einblasen von unter Druck stehender Luft oder dergleichen ausgebildet, um das Ablassen von Löschmittel zu unterstützen. Vorzugsweise umfasst das Luftdrucksystem wenigstens eine Quelle für Pressluft, beispielsweise umfassend einen Kompressor und/oder Pressluftflaschen. Vorzugsweise umfasst das Luftdrucksystem wenigstens eine Luftleitung, die in einen oberen Bereich des Löschmitteltanks mündet. Vorzugsweise umfasst das Luftdrucksystem Luftdrucksteuerglieder, wie Ventile, und eine Luftdrucksteuerung.

In einer bevorzugten Ausgestaltung umfasst das Passagierflugzeug für den Einsatz zur Brandbekämpfung einen Feuerlöschmittelzusatz. Hierzu kann der in der Regel rote Feuerlöschmittelzusatz zusammen mit dem Löschmittel in den Löschmitteltank gefüllt werden. Alternativ oder zusätzlich kann der Feuerlöschmittelzusatz an Bord, z.B. aus einer dort dauerhaft oder nur für den Brandbekämpfungseinsatz installierten Feuerlöschmittelquelle einem Löschmittel, wie insbesondere Wasser, zugefügt werden.

Es ist bevorzugt, dass die Löschmitteldüse unterhalb des Rumpfes nach außen mündet.

Es ist bevorzugt, dass die Löschmitteldüse hinter den Tragflächen angeordnet ist.

Es ist bevorzugt, dass die Löschmitteldüse ein Ventil zum Öffnen und Schließen aufweist.

Es ist bevorzugt, dass die Löschmitteldüse zum Ablassen des Inhalts des Löschmitteltanks oder des Löschmitteltanks und eventueller zusätzlicher Löschmittelcontainer in einem Schuss ausgebildet ist.

Gemäß der Erfindung wird somit ein Mitteltank, der dauerhaft in einem eine Passagierkabine mit Passagiersitzen aufweisenden Rumpf eines Passagierflugzeugs eingebaut ist, als Löschmitteltank zur Brandbekämpfung verwendet.

Gemäß einem weiteren Aspekt schafft die Erfindung ein Betriebsverfahren für ein Passagierflugzeug, das ein Typ aus einer Flugzeugbaureihe ist, die auch ein Langstreckenflugzeug aufweist, bei dem ein dauerhaft zusätzlich installierter Mitteltank zur Reichweitenverlängerung vorgesehen ist und bei dem der Mitteltank als Löschmitteltank verwendet wird, wobei das Betriebsverfahren die Schritte umfasst:
Betreiben des Passagierflugzeugs als Verkehrsflugzeug für den Transport von Passagieren im Normalbetrieb,
und, im Fall eines Großbrandes, Befüllen des Löschmitteltanks mit Löschmittel und Betreiben des Passagierflugzeugs als Feuerlöschflugzeug.

Bei beiden vorgenannten weiteren Aspekten ist bevorzugt, dass die Passagierkabine als Single-Aisle-Passagierkabine ausgebildet ist.

Es ist bevorzugt, dass zum Betrieb des Passagierflugzeugs als Feuerlöschflugzeug wenigstens ein zusätzlicher Löschmittelcontainer in dem Frachtraum installiert wird.

Es ist bevorzugt, dass das Löschmittel gemäß einer der folgenden Betriebsweisen abgelassen wird:
a) Ablassen des Inhalts des Löschmitteltanks in einem Schuss,
b) Ablassen des Inhalts des Löschmitteltanks und des wenigstens einen zusätzlichen Löschmittelcontainers in einem Schuss,
c) Ablassen des Inhalts des Löschmitteltanks, Pumpen weiteren Löschmittels aus dem wenigstens einen zusätzlichen Löschmittelcontainer in den Löschmitteltank und dann Ablassen des nachgefüllten Inhalts des Löschmitteltanks.

Gemäß einem weiteren Aspekt schafft die Erfindung eine Passagierflugzeugbaureihe umfassend mehrere Passagierflugzeuge mit gleichem Außenaufbau einschließlich Rumpf, Fahrwerk, Flügeln, Leitwerk, Steuerflächen, wobei in dem gleichen Rumpf jeweils eine Passagierkabine zur Aufnahme von Passagiersitzen, ein Frachtdeck und ein von Kontur, Anordnung und Abmaßen gleicher Mitteltank angeordnet ist, wobei die Passagierflugzeugbaureihe ein Langstrecken-Passagierflugzeug mit verlängerter Reichweite, bei dem der Mitteltank zur Nutzung als zusätzlicher Treibstofftank ausgebildet ist, und ein als zusätzlich als Feuerlöschflugzeug nutzbares Passagierflugzeug nach einer der voranstehenden Ausgestaltungen umfasst, wobei der Mitteltank der Löschmitteltank ist.

Vorzugsweise umfasst die Passagierflugzeugbaureihe weiter ein zusätzlich zu seiner Funktion zum Passagiertransport als Tankflugzeug nutzbares Passagierflugzeug, bei dem der Mitteltank als Flüssigkeitstank zur Lieferung von Flüssigkeit von einer Versorgungsstelle zu einer entlegenen Station ausgebildet ist.

Vorzugsweise umfasst die Passagierflugzeugbaureihe weiter ein Kurz- oder Mittelstrecken-Passagierflugzeug, das den anderen Passagierflugzeugen, jedoch ohne den zusätzlichen Mitteltank, entspricht.

Bevorzugt sind die Flugzeuge der Passagierflugzeugbaureihe Schmalrumpfflugzeuge.

Vorteilhafte Ausgestaltungen der Erfindung betreffen die Verwendung eines Flugzeugs ohne große Umbaumaßnahme zu unterschiedlichen Einsatzzwecken. Insbesondere wird ein Mehrzweckflugzeug verwendet, das sowohl als Passagierflugzeug, insbesondere für Kurz- oder Mittelstrecken, als auch als Feuerlöschflugzeug einsetzbar ist.

Gemäß der Erfindung wird vorgeschlagen, einen für den entsprechenden Typ von Flugzeugen (Flugzeuge einer gleichen Flugzeugbaureihe) zur Reichweitenverlängerung dauerhaft installierten Tank als Löschmitteltank zum Einsatz für die Brandbekämpfung zu verwenden.

Somit können derartige Flugzeuge in Serienfertigung gefertigt werden und mit nur geringen Modifikationen wahlweise als Verkehrsflugzeuge mit verlängerter Reichweite oder als Mehrzweckflugzeuge mit einem für andere Zwecke nutzbaren Tank verwendet werden.

Einige konkrete Ausführungsbeispiele gehen von einem Flugzeugmodell des Typs A321XLR oder vergleichbaren Schmalrumpf-Passagierflugzeugen mit zusätzlichem Mitteltank, insbesondere Rear-Center-Tank, aus. Vorteilhaft wird der zusätzliche Mitteltank oder Rear-Center-Tank als Löschmitteltank zur Brandbekämpfung verwendet.

Es ist auch denkbar, den zusätzlichen Tank auch für andere Zwecke, z.B. zum Transport von Flüssigkeiten wie Kraftstoff zu fernab gelegenen Stationen zu verwenden.

Erste Prototypen des A321XLR haben einen Rear-Center-Tank aus Aluminium. Zukünftige Exemplare werden mit einem Rear-Center-Tank aus Faser-Metall-Laminat ausgestattet. Beide Ausführungen des Rear-Center-Tanks sind gut als Löschmitteltanks geeignet (Er könnte auch zum Kraftstofftransport zu fernab gelegenen Stationen verwendet werden).

Eine damit mögliche Nutzung als Feuerlöschflugzeug erweitert die Funktionalität des Flugzeugs.

Zusätzliche Tanks, vorzugsweise ausgebildet als Tankcontainer, mehr vorzugsweise als ULDs, siehe [5], und/oder als ACTs, siehe [6], die in dem Frachtdeck angeordnet werden, können die Flüssigkeitsvolumenkapazität, die für Löschmittel oder dergleichen verwendet werden kann, vergrößern.

Durch nur kleinere Umbauten können die vorerwähnten Prototypen zu einem Mehrzweckflugzeug zum Passagiertransport und zur Brandbekämpfung umgestaltet werden.

Das Passagierflugzeug kann auch von Beginn an als Mehrzweckflugzeug produziert und eingesetzt werden.

Es ist auch möglich, das Passagierflugzeug zunächst nur als Verkehrsflugzeug auf Kurz-, Mittel- und Langstrecke unter Nutzung des Tanks in dem Rumpf als Treibstofftank zur Reichweitenverlängerung einzusetzen. In einem späteren Stadium der Lebensdauer kann das Passagierflugzeug durch nur kleine Umbauten zu dem Mehrzweckflugzeug umgebaut werden, um sodann den Tank als Löschmitteltank zu nutzen (Second Life).

Bevorzugte Ausgestaltungen der Erfindung weisen einen oder mehrere der folgenden Merkmale auf:
- Mehrfachverwendung des Flugzeugs (Passagierflugzeug oder Feuerlöschflugzeug)
- weniger Kosten pro Flugstunde (keine unprofitablen Zeiten)
- die Tankausrüstung, einschließlich z.B. Pumpen, können im Laderaum untergebracht sein, es ist keine spezielle Flughafen-Unterstützung notwendig
- es ist ein neuer Einsatzzweck für bestehende Prototypen/Langstrecken-Schmalrumpfflugzeuge geschaffen
- das Passagier-Feuerlöschflugzeug kann im täglichen (Normal-)Betrieb ohne Einschränkungen als Passagierflugzeug verwendet werden
- im Falle eines Großbrandes ist es möglich, das Passagier-Feuerlöschflugzeug in einem sehr kleine Zeitrahmen umzurüsten, um einen Einsatz als Feuerlöschflugzeug zu ermöglichen
- bei einer Ausgestaltung werden hierzu lediglich die zusätzlichen Löschmittelcontainer installiert
- eine Nutzung ohne zusätzliche Löschmittelcontainer ist für einen schnellen Einsatz mit entsprechend verringerter Löschmittelkapazität möglich
- eine duale Verwendung als Passagier- und Feuerlöschflugzeug ist für die meisten bisher bekannten Flugzeuge nicht möglich
- die bisher eingesetzten Feuerlöschflugzeuge, wie z.B. in [4] beschrieben und gezeigt, werden nur im Brandfall benötigt und werden für die übrige Zeit nicht benutzt, müssen aber stets zum Erhalt der Einsatzbereitschaft gewartet und gepflegt werden
- das gemäß bevorzugten Ausgestaltungen der Erfindung verwendete Passagierflugzeug hat zwar gegenüber einer Version ohne den zusätzlichen dauerhaft installierten Tank Nachteile hinsichtlich nutzbaren Frachtraums und Nutzlast, ist aber weitaus wirtschaftlicher als ein reines Feuerlöschflugzeug
- Erfahrungen mit Großbränden im südlichen Europa im Sommer 2021 haben gezeigt, dass es schwierig und aufwändig ist, bei Großbränden genügend Spezialflugzeuge zur Brandbekämpfung herbeizuschaffen; mit dem Kombinationsflugzeug kann bereits durch den täglichen Betrieb eine größere Verteilung von Feuerlöschflugzeugen geschaffen werden
- anders als die in [2] und [3] beschriebenen und gezeigten Flugzeuge hat das Passagierflugzeug gemäß Ausführungsbeispielen der Erfindung einen großen dauerhaft installierten Löschmitteltank mit der Möglichkeit der schnellen Erweiterung durch zusätzliche Löschmittelcontainer und kann somit mit viel kürzeren Umrüstzeiten als Passagierflugzeug und als Feuerlöschflugzeug verwendet werden
- Zusätzlich zu Löschmitteltransport ist auch ein Transport von anderen Flüssigkeiten möglich. Es wäre auch denkbar, das Flugzeug zur Versorgung fernab gelegener Gegenden mit Wasser oder mit Kraftstoff, wie Benzin oder Diesel oder Heizöl, zu verwenden

Ein Ausführungsbeispiel wird im Folgenden anhand der beigefügten Zeichnungen näher erläutert. Darin zeigt:
- Fig. 1: eine schematische perspektivische Ansicht eines Ausführungsbeispiels eines Passagierflugzeugs, das auch als Feuerlöschflugzeug ausgebildet ist, bei einem Einsatz zur Bekämpfung eines Großbrandes;
- Fig. 2: eine teils im Schnitt dargestellte Draufsicht auf das Passagierflugzeug, wobei ein oberer Teil zur Darstellung der Passagierkabine des Passagierflugzeugs weggeschnitten ist;
- Fig. 3: eine schematische Seitenansicht, teils im Schnitt, eines Rumpfes des Passagierflugzeuges, mit einer Feuerlöschflugzeugausrüstung, die einen dauerhaft installierten Mitteltank als Löschmitteltank sowie bei Bedarf in einem Frachtdeck installierte zusätzliche Löschmittelcontainer aufweist;
- Fig. 4: eine schematisierte Blockansicht eines Mittelteils des Rumpfes zur Darstellung einer beispielhaften Konfiguration der Feuerlöschflugzeugausrüstung;
- Fig. 5: eine perspektivische Ansicht eines Ausführungsbeispiel für einen zusätzlichen Löschmittelcontainer;
- Fig. 6: eine Blockdarstellung der Feuerlöschflugzeugausrüstung;
- Fig. 7: die Blockdarstellung von Fig. 6, in der eine erste mögliche Betriebsweise der Feuerlöschflugzeugausrüstung dargestellt ist;
- Fig. 8: die Blockdarstellung von Fig. 6, in der eine zweite mögliche Betriebsweise der Feuerlöschflugzeugausrüstung dargestellt ist; und
- Fig. 9: eine schematisierte Blockansicht eines Mittelteils des Rumpfes eines weiteren Passagierflugzeugs dergleichen Passagierflugzeugbaureihe wie das in den Fig. 1 bis 8 dargestellte Passagierflugzeug, in einer Konfiguration zum Transport von Flüssigkeiten.

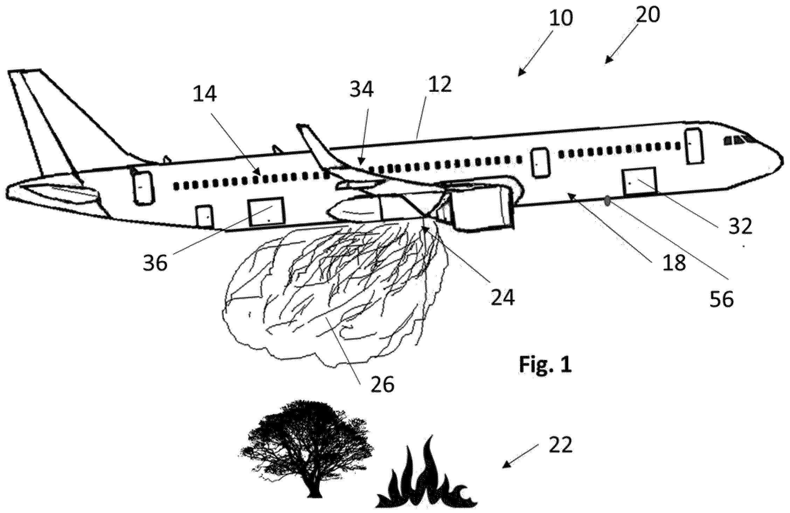

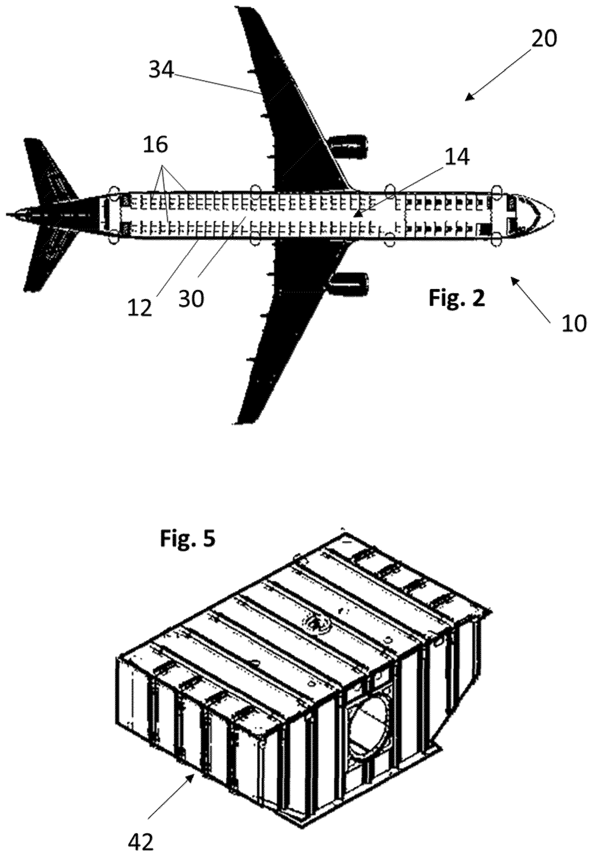

Die Fig. 1 bis 3 zeigen ein Passagierflugzeug 10, das eine in dem oberen Teil eines Rumpfs 12 untergebrachte Passagierkabine 14 mit wenigstens zwanzig Passagiersitzen 16 und ein in dem unteren Teil des Rumpfes 12 angeordnetes Frachtdeck 18 aufweist.

Das Passagierflugzeug 10 ist neben seinem Einsatzzweck zum Transport von Passagieren auch als Feuerlöschflugzeug 20 zur Bekämpfung eines Großbrandes 22, wie beispielsweise eines Waldbrands oder Flächenbrandes am Erdboden, verwendbar.

Hierzu weist das Passagierflugzeug 10 einen dauerhaft installierten Löschmitteltank 24 zur Aufnahme von Löschmittel 26, wie insbesondere Löschwasser, zur Brandbekämpfung und wenigstens eine mit dem Löschmitteltank 24 verbundene Löschmitteldüse 28 zum Verteilen des Löschmittels 26 über den Großbrand 22 auf.

Das Passagier- und Feuerlöschflugzeug 10, 20 ist als Schmalrumpfflugzeug ausgebildet, wobei die Passagiersitze 16 der Passagierkabine 14 in zehn bis fünfzig, vorzugsweise 20 bis 40 Reihen links und rechts neben dem einen Mittelgang 30 angeordnet sind.

Das Frachtdeck weist einen vorderen Frachtraum 32 vor den Tragflügeln 34 und vor dem im Bereich der Tragflügel 34 untergebrachten Fahrwerk (nicht dargestellt) und einen hinteren Frachtraum 36 auf. Der Löschmitteltank 24 ist unmittelbar hinter dem Bereich für das Fahrwerk und vor dem hinteren Frachtraum 36 im unteren Bereich des Rumpfes 12, unterhalb der Passagierkabine 14 untergebracht. Die Frachträume 34, 36 sind mit mehreren Aufnahmeplätzen 38 zur Aufnahme von Unit Load Devices (ULD - siehe [5]), zum Beispiel vom Typ LD3, und mit einem entsprechenden Frachtladesystem und Verankerungen (nicht dargestellt) ausgerüstet.

Eine bevorzugte konkrete Ausgestaltung des Passagierflugzeuges 10 geht vom Typ A321XLR, einem Schmalrumpfflugzeug der Airbus A320-Familie (d.h. einer Passagierflugzeugbaureihe) aus, dessen Reichweite durch einen zusätzlichen dauerhaft im Bereich hinter den Tragflügeln im unteren Bereich des Rumpfes installierten Treibstofftank - aufgrund seiner Position im zentralen Rumpfbereich hinter den Tragflügeln als Rear-Center-Tank, kurz RCT genannt - vergrößert worden ist. Das auch als Feuerlöschflugzeug 20 einsetzbare Passagierflugzeug 10 wird entsprechend wie der A321XLR gefertigt, wobei aber der hier 12900 I fassende Rear-Center-Tank als Löschmitteltank 24 verwendet wird. Für nähere Einzelheiten zu möglichen Ausmaßen und sonstigen Merkmalen des bevorzugten Ausführungsbeispiels des Passagierflugzeugs kann daher auf [1] verwiesen werden. Die Passagierflugzeugbaureihe mit der Bezeichnung A321 umfasst auch ein Schmalrumpfflugzeug ohne den RCT zum Einsatz als Verkehrsflugzeug auf Kurz- und Mittelstrecken.

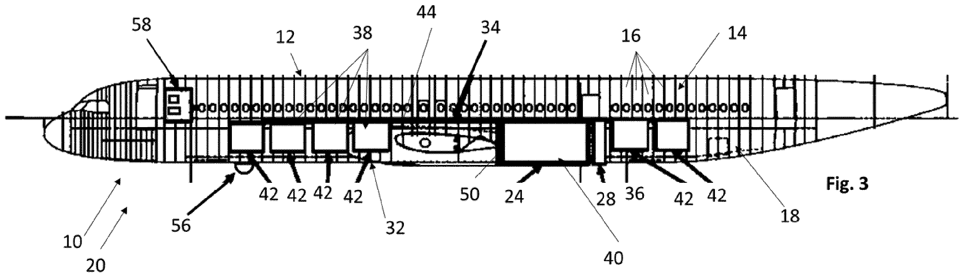

Der Löschmitteltank 24 und die Löschmitteldüse 28 sind Teile einer Feuerlöschflugzeugausrüstung 40 des Passagierflugzeugs 10, die im Folgenden näher anhand der Darstellungen der Fig. 3 bis 6 erläutert wird.

Wie in den Fig. 3 bis 6 dargestellt, weist die Feuerlöschflugzeugausrüstung 40 neben dem als Löschmitteltank 24 verwendeten Rear-Center-Tank und der Löschmitteldüse 28 eine, mehrere oder alle der folgenden Einheiten auf: wenigstens einen Löschmittelcontainer 42, ein Löschmittelleitungssystem 44, eine Pumpeinrichtung 46, ein Belüftungssystem 48, eine Heizeinrichtung 50, ein Flüssigkeitsbefüllsystem 52, ein System 54 zur Zugabe eines Feuerlöschmittelzusatzes, eine Kamera 56, einen Bediener-Arbeitsplatz 58 und eine Steuerung 60.

Bei dem dargestellten Ausführungsbeispiel sind mehrere Löschmittelcontainer 42 vorgesehen, die nicht permanent in dem Passagierflugzeug 10 mitgeführt werden, sondern zur Aufnahme auf den Aufnahmeplätzen 38 des vorderen und hinteren Frachtraums 32, 36 als ULD-Container (siehe [5]) genormt sind. Beispielsweise werden für den Einsatzfall zur Brandbekämpfung vier Löschmittelcontainer 42 in dem vorderen Frachtraum 32 und zwei Löschmittelcontainer 42 in dem hinteren Frachtraum 36 installiert. Insbesondere sind die Löschmittelcontainer 42 gleich aufgebaut wie die in [6] beschriebenen und gezeigten ACTs.

Bei einem konkreten Ausführungsbeispiel hat jeder Löschmittelcontainer 42 ein für Löschmittel 26 nutzbares Volumen von 2992 I. Bei dem konkreten Ausführungsbeispiel ergibt dies ein insgesamt für Löschmittel 26 nutzbares Volumen von 1*12900 I+6*2992 1=30852 I. Natürlich ist dies nur ein Beispiel, je nach Größe des Rumpfes 12, der eventuell verwendeten Anzahl und Größe der Löschmittelcontainer 42 und der Größe des für den als Löschmitteltank 24 dauerhaft installierten Mitteltanks können sich abweichende Werte ergeben.

Die Löschmittelcontainer 42 erweitern als zusätzliche Tanks, die in dem Frachtdeck 18 installiert sind, die Flüssigkeitskapazität.

Bei der bevorzugten, von der Passagierflugzeugbaureihe A320/A321/A319 ausgehenden Ausführungsform ermöglicht somit der als Löschmitteltank 24 genutzte Rear-Center-Tank, der bei anderen Passagierflugzeugen der gleichen Passagierflugzeugbaureihe als Treibstofftank zur Reichweitenverlängerung genutzt wird, zusammen mit sechs zusätzlichen Löschmittelcontainern 42, ausgebildet als ACTs, eine Flüssigkeitskapazität für Löschmittel von 30852 I. Dabei wurde als Grundlage zur Kapazitätsberechnung der Löschmittelcontainer 42 die als Option für den A319ACJ angebotenen ACTs zugrunde gelegt.

Zur Ausbildung als Feuerlöschflugzeug 20 werden bei der bevorzugten Ausgestaltung zusätzlich installiert:
- ein Flüssigkeitsbefüllsystem 52 und ein Ablassrohr 74 und Ablassventile 66
- ein Belüftungssystem 48 für eine Belüftung der Tanks 24, 42 zur Vermeidung von Strukturschäden
- eine Tank-Heizeinrichtung 50 zur Vermeidung von Eisbildung
- ein System 54 zum Zugeben von Feuerlöschmittelzusatz (rot) zum Markieren der Brandbekämpfung am Boden

Während des Feuerlöschbetriebs ermöglicht der Anstellwinkel 76 das vollständige Entleeren des Haupttanks - Löschmitteltank 42.

Die Flüssigkeitskapazität liegt verglichen mit anderen Feuerlöschflugzeugen auf einem Topniveau; nur zwei der bekannten, beispielsweise in [4] genannten Feuerlöschflugzeuge haben eine höhere Kapazität, wie sich aus der folgenden Tabelle 1 ergibt, und davon kann beispielsweise der komplett zum Feuerlöschflugzeug umgebaute und nur als Feuerlöschflugzeug nutzbare B747-Tanker nicht von kleinen Flughäfen aus operieren, die meist am nächsten zu einem Großbrand liegen. In Tabelle 1 ist die bevorzugte Ausführungsform des auch als Feuerlöschflugzeug 20 nutzbaren Passagierflugzeugs als "A321 FF (fire fighter)" bezeichnet

Das hier dargestellte Passagierflugzeug 10 in zusätzlicher Ausbildung zur Nutzung als Feuerlöschflugzeug 20 ermöglicht weiterhin die typische Nutzung als Passagierflugzeug, wobei nur in einem Fall eines Großbrandes 22 die zweite Funktion als Feuerlöschflugzeug 20 benutzt werden braucht. Diese duale Funktion ist viel wirtschaftlicher als ein typisches Feuerlöschflugzeug, das auf seinen Einsatz wartet.

Bei einer bevorzugten Ausgestaltung werden für einen schnellen Übergang vom reinen Passagierbetrieb zu einem Betrieb als Feuerlöschflugzeug lediglich die zusätzlichen Löschmittelcontainer 42 geladen und installiert.

**Tabelle 1: Vergleich der Löschmittelkapazität der hier dargestellten bevorzugten Ausführungsform des Passagierflugzeugs 10 mit der anderer Feuerlöschflugzeuge**

| Flugzeug | Gallonen | Liter |
|---|---|---|
| CL-215/ Bombardier 415 "Super scooper" | 1621 | 6136 |
| C295 Airbus | 1850 | 7000 |
| Lockheed P-2 Neptune | 2700 | 10220 |
| Douglas DC-6 | 2800 | 10220 |
| Lockheed C130 Airtanker - Modular Airborne Firefighting System | 3000 | 11356 |
| Lockheed P-3 Orion | 3000 | 11356 |
| Martin Mars | 7200 | 27254 |
| A321 FF (fire-fiqhter) | 8150 | 30852 |
| DC-10 | 12000 | 45424 |
| Boeing 747 | 24000 | 90849 |

Die Feuerlöschflugzeugausrüstung 40 des Passagierflugzeuges 10 weist eine Einrichtung 62 zum schnellen Füllen und Ablassen von flüssigen Löschmittel 26 auf. Diese wird durch die Löschmitteldüse 28, das Flüssigkeitsbefüllsystem 52 mit dem Löschmittelleitungssystem 44 und der Pumpeinrichtung 46 und durch das Belüftungssystem 48 gebildet.

Das Löschmittelleitungssystem 44 weist mehrere in dem Frachtdeck 18 installierte Löschmittelleitungen 45, insbesondere in Form von Wasserleitungsrohren, auf, die mit den Löschmittelcontainern 42 bei deren Installation verbindbar sind und die andererseits mit der Pumpeinrichtung 46 und dem Löschmitteltank 24 und/oder der Löschmitteldüse 28 in Verbindung stehen. Weiter sind nicht näher dargestellte Stellglieder, insbesondere Ventile, zur Steuerung des Flüssigkeitsflusses vorgesehen.

Das Belüftungssystem 48 ist dazu ausgebildet, bei Ablassen des Löschmittels 26 schnell Luft in den Löschmitteltank 24 und gegebenenfalls die Löschmittelcontainer 42 nachzuführen, um Beeinträchtigungen der Struktur durch Druckunterschiede zu vermeiden. Bei einer bevorzugten Ausgestaltung weist das Belüftungssystem 48 ein Luftdrucksystem 63, vorzugsweise mit einer Pressluftquelle, beispielsweise einem Kompressor 64, auf, um unter Druck stehende Luft (oder gegebenenfalls ein anderes unter Druck stehendes Gas) in den Löschmitteltank 24 und/oder die Löschmittelcontainer 42 einzuleiten, um so ein schnelles Ablassen zu unterstützen.

Das Ablassen kann noch durch den Anstellwinkel 76 unterstützt werden, so dass Löschmittel 26 zu der Löschmitteldüse 28 fließt.

Die Löschmitteldüse 28 kann durch wenigstens ein Ventil 66 geöffnet und geschlossen werden und ist zum Ablassen eines großen Flüssigkeitsstromes ausgebildet. Die Löschmitteldüse 28 ist durch das dicke Ablassrohr 74, in dem das wenigstens eine Ventil 66 zum Verschließen angeordnet ist gebildet. Der Saugeffekt im Flugzustand unterstützt das Ablassen und das Verteilen des Löschmittels in der Luft über dem Großbrand 22. Selbstverständlich können mehrere Löschmitteldüsen 28 zum schnelleren Ablassen vorgesehen sein.

Mittels des Flüssigkeitsbefüllsystems 52 kann Löschmittel 26, insbesondere Wasser, in den Löschmitteltank 24 und gegebenenfalls in die Löschmittelcontainer 42 eingefüllt werden. Hierzu kann ein gesonderter Einfüllstutzen 53 vorgesehen sein. Das System 54 zur Zugabe von Feuerlöschmittelzusatz ist dazu ausgebildet, einen Feuerlöschmittelzusatz 55, wie z.B. eine (meist rote) Markierungsfarbe und/oder ein Mittel zur Flammenunterdrückung, beim Befüllen zuzugeben. Vorzugsweise ist das Flüssigkeitsbefüllsystem 52 wie der Löschmitteltank 24 dauerhaft installiert. Das System 54 zur Zugabe von Feuerlöschmittelzusatz kann dauerhaft installiert sein oder, z.B. als ULD, mobil ausgeführt sein, um im Brandfall installiert zu werden. Es weist eine Quelle, beispielsweise einen Vorratsbehälter 72 für Löschmittelzusatz und Anschlussleitungen auf. Das System 54 ist optional vorgesehen, bei anderen Versionen kann, falls Löschmittelzusatz zur Brandbekämpfung erwünscht oder vorgeschrieben ist, der Löschmittelzusatz dem Löschmittel 26 bereits außerhalb des Passagierflugzeugs 10 zugegeben werden.

Die Pumpeinrichtung 46 weist eine Pumpe 68 für Löschmittel 26 sowie Anschlussleitungen 70 auf und ist dazu ausgebildet, Löschmittel 26 über die Leitungen des Löschmittelleitungssystems 44 zwischen dem Löschmitteltank 24 und den Löschmittelcontainern 42 zu transportieren. Sie kann auch ausgebildet sein, das Ablassen zu unterstützen. Bei einer Ausgestaltung ist die Pumpeinrichtung 46 fest beispielsweise in dem Frachtraum 32, 36 installiert. Bei einer anderen Ausgestaltung ist die Pumpeinrichtung 46 mobil ausgebildet, beispielsweise an einem der Löschmittelcontainer 42 angeordnet oder als gesondertes ULD ausgeführt, das zum Einsatz als Feuerlöschflugzeug 20 installiert werden kann und ansonsten zusammen mit den Löschmittelcontainern 42 an einem Flughafen gelagert werden kann.

Die Steuerung 60 steuert die Feuerlöschflugzeugausrüstung 40, insbesondere dessen Stellglieder, Ventile 66 und Pumpeinrichtung 46 nach vorgespeicherten Ablaufprogrammen entsprechend Befehlen durch eine Bedienperson, die diese an dem Bediener-Arbeitsplatz 58 über eine Mensch-Maschine-Schnittstelle 67, beispielsweise einem Touchpad, einer Kombination aus Anzeigeeinrichtung, z.B. Monitor oder Display, und Bedienelementen wie Tasten, Tastatur, Joystick oder dergleichen, eingeben kann. Die Kamera 56 ist auf den Bereich unter dem Passagierflugzeug 10 und somit auf den Zielbereich der Löschmitteldüse 28 gerichtet, um die Bedienperson beim Bedienen zu unterstützen.

Die Heizeinrichtung 50 ist zum Beheizen des Löschmitteltanks 24 und/oder der Frachträume 32, 36 ausgebildet, um Eisbildung im Löschmittel zu vermeiden.

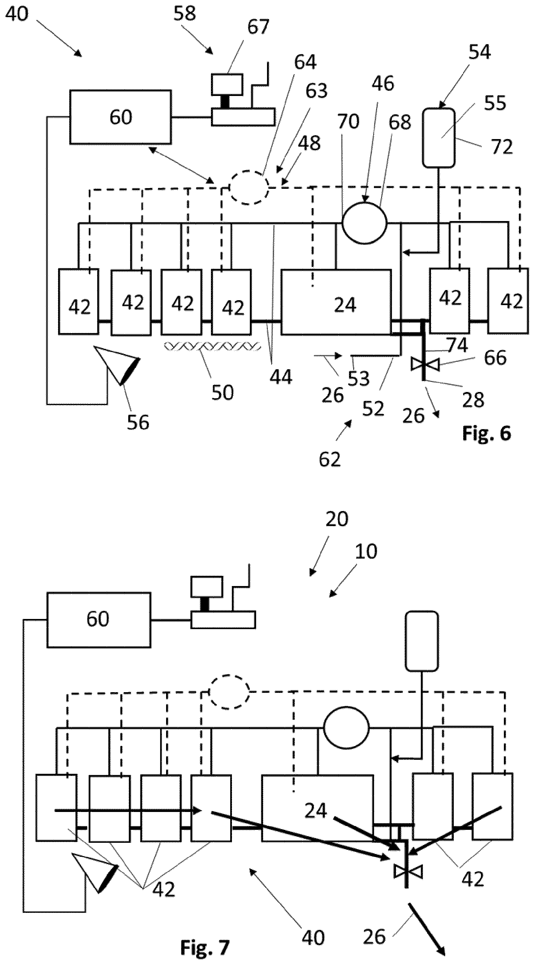

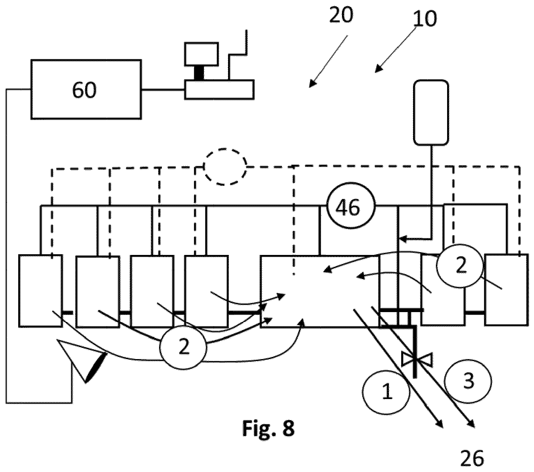

Im Folgenden werden anhand der Darstellung der Fig. 7 und 8 mögliche unterschiedliche Betriebsweisen der Feuerlöschausrüstung 40 zur Brandbekämpfung erläutert.

Vorzugsweise erfolgt der Feuerlöscheinsatz gemäß einer der folgenden Betriebsweisen:
a) nur das Löschmittel aus dem Haupt-Löschmitteltank 24 (z.B. 12900 I) wird direkt abgelassen (die Löschmittelcontainer 42 werden nicht benötigt)
b) der Haupt-Löschmitteltank 24 wird zusammen mit den z.B. sechs zusätzlichen Löschmittelcontainern 42 abgelassen (z.B. 30800 I)
c) es werden zwei einzelne Ablassvorgänge von z.B. 12900 I aus dem Haupt-Löschmitteltank 24 durchgeführt, dabei wird zwischen den Ablassvorgängen eine Schleife geflogen, um den Großbrand erneut zu überfliegen, dabei wird Löschmittel 26 von den Löschmittelcontainern 42 zu dem Löschmitteltank 24 übertragen, um einen zweiten Schuss zur Verfügung zu haben - es ist kein gesondertes Nachfüllen am Flughafen notwendig.

Die Betriebsweise a) ist in Fig. 8 durch den Pfeil (1) angedeutet. Das Ablassen des Löschmitteltanks 24 (z.B. 12900 I) erfolgt in einem großen Schuss, wie auch in Fig. 1 gezeigt. Es gibt eine sehr schnelle Löschmittelabgabe unmittelbar durch das dicke Ablassrohr 74.

Fig. 7 zeigt die Betriebsweise b), in der alle Tanks 24, 42 abgelassen werden. Die komplette Flüssigkeitsmenge von mehr als 30 Tonnen Löschmittel 26 (z.B. Wasser) kann in einem einzelnen Schuss über einem riesigen Gebiet abgelassen werden. Alle Tanks 24, 42 werden entleert.

In Fig. 8 ist auch die Betriebsweise c) gezeigt, bei der zwei (oder auch mehr) einzelne Löschmittel-Ablass-Schüsse durchgeführt werden. Zunächst erfolgt wie durch den Pfeil (1) angedeutet das Ablassen des Löschmitteltanks 24 in einem großen Schuss, so wie dies auch bei a) durchgeführt wird. Dann wird, wie durch die Pfeile (2) angedeutet, Löschmittel 26 durch die Pumpeinrichtung 46 aus den zusätzlichen Löschmittelcontainern 42 in den Löschmitteltank 24 gepumpt, um einen zweiten Schuss aus dem Haupt-Löschmitteltank 24 zu ermöglichen. Ein zusätzlicher Rückflug zum Flughafen ist hierzu nicht notwendig.

Andere Kombinationen des Ablassens der Tanks 24, 42 sind möglich.

Wie oben erwähnt ist bei einer bevorzugten Ausgestaltung das zusätzlich als Feuerlöschflugzeug 20 nutzbare Passagierflugzeug 10 ein Flugzeug, vorzugsweise Schmalrumpfflugzeug (auch Standardrumpfflugzeug genannt), aus einer Passagierflugzeugbaureihe, wie z.B. der A320-Familie, wobei ein bei einem Langstrecken-Flugzeug dieser Baureihe als zusätzlicher Tank dauerhaft eingebauter Mitteltank als Löschmitteltank 24 genutzt wird.

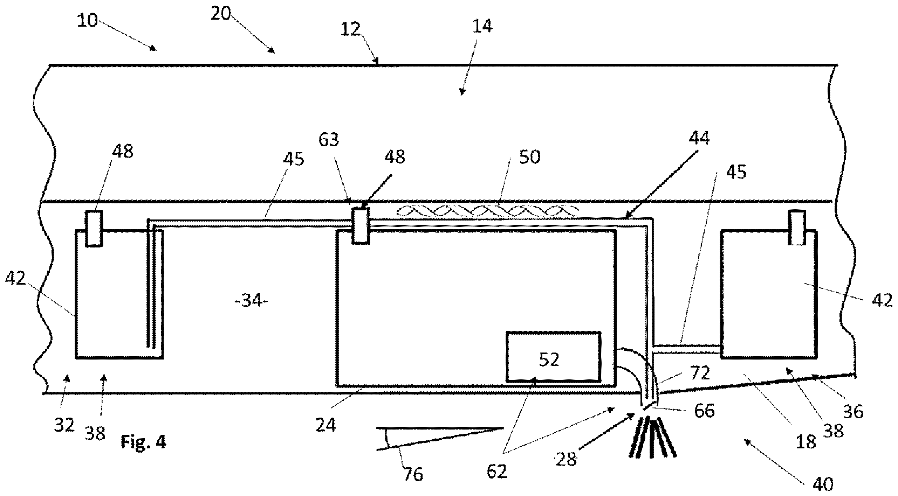

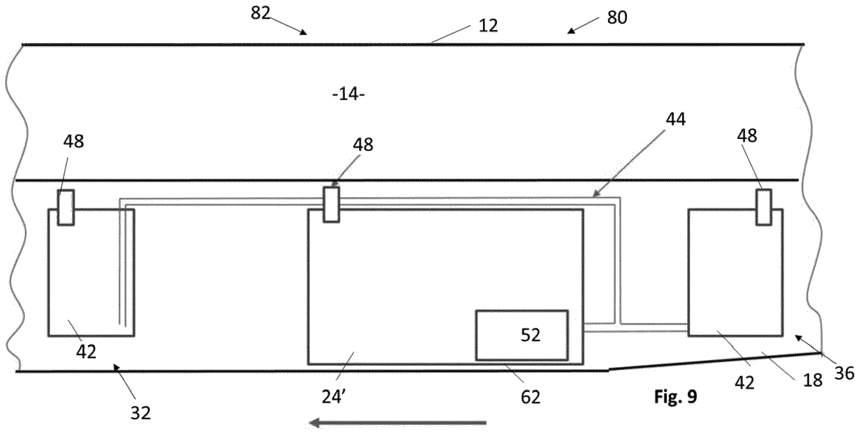

In Fig. 9 ist noch ein weiteres Passagierflugzeug 80 der gleichen Baureihe wie das Passagierflugzeug 10 gezeigt, bei dem der gleiche Mitteltank zu noch einem anderen Zweck genutzt wird. Das weitere Passagierflugzeug 80 entspricht bis auf die in Fig. 9 in Vergleich zu Fig. 4 verdeutlichten Abweichungen, nämlich dem Fehlen der Löschmitteldüse 28, dem Passagierflugzeug 10, so dass für die weiteren Merkmale auf die obigen Ausführungen verwiesen werden kann.

Das weitere Passagierflugzeug 80 ist einerseits - wie das Passagierflugzeug 10 - zum Normalbetrieb als Passagierflugzeug ausgebildet. Der Mitteltank 24'- und gegebenenfalls die zusätzlichen Flüssigkeitscontainer 42' (entsprechend den Löschungsmittelcontainern 42) werden hier zum Transport von Flüssigkeit wie Wasser, Kraftstoff, ... zur Versorgung von fernab gelegenen Stationen genutzt. Hierzu ist das Flüssigkeitsbefüllsystem 52 nicht nur zum Befüllen des Mitteltanks 24' und der zusätzlichen Flüssigkeitscontainer 42`, sondern auch zum Entleeren derselben ausgebildet, was ebenfalls über den Einfüllstutzen 53 erfolgen kann.

Bisher führen sehr wenige Fluggesellschaften einen Großraum-Flüssigkeitstransport (z.B. "bulk fuel transport") durch. Zum Beispiel transportieren Fluggesellschaften wie Alkan Air, Air Tindi, Buffalo Airways und Air North Kraftstoff (kein Flugtreibstoff) für ländliche Siedlungen oder Minenbetreiber in Nord-Kanada. Hierzu wird der Kraftstoff in schlauchartigen flexiblen Behältern im Inneren von Frachtflugzeugen transportiert. Das Passagierflugzeug 80 kann dagegen im Normalbetrieb für den Passagiertransport und als zusätzliche Funktion (bei Transport von brennbaren Flüssigkeiten vorteilhaft ohne Passagiere, aber ohne Umbau der Passagierkabine) als Tankflugzeug 82 genutzt werden.

Wenngleich Ausführungsbeispiele anhand des Beispiels der Passagierflugzeugbaureihe der A320-Familie beschrieben worden sind, so sind die hier dargestellten Ideen selbstverständlich auch auf andere Flugzeugbaureihen, egal von welchem Hersteller, übertragbar.

Die Erfindung betrifft ein Mehrzweckflugzeug, das einerseits als Passagierflugzeug (10) und andererseits als Feuerlöschflugzeug (20) ausgebildet ist. Das Passagierflugzeug (10) umfasst neben einer dauerhaft bestuhlten Passagierkabine (14) einen dauerhaft installierten Löschmitteltank (24) zur Aufnahme von Löschmittel (26) wie z.B. Wasser und wenigstens eine mit dem Löschmitteltank (26) verbundene Löschmitteldüse (28) zum Ablassen des Löschmittels (26).

Das Passagierflugzeug (10) ist ein Typ aus einer Flugzeugbaureihe, die auch ein

Langstreckenflugzeug aufweist, bei dem ein dauerhaft zusätzlich installierter Mitteltank zur Reichweitenverlängerung vorgesehen ist. Bei dem hier dargestellten Passagierflugzeug (10) wird der Mitteltank als Löschmitteltank (24) verwendet.

### Bezugszeichenliste:

- 10: Passagierflugzeug
- 12: Rumpf
- 14: Passagierkabine
- 16: Passagiersitz
- 18: Frachtdeck
- 20: Feuerlöschflugzeug
- 22: Großbrand
- 24: Löschmitteltank
- 26: Löschmittel
- 28: Löschmitteldüse
- 30: Mittelgang
- 32: vorderer Frachtraum
- 34: Tragflügel
- 36: hinterer Frachtraum
- 38: Aufnahmeplatz
- 40: Feuerlöschflugzeugausrüstung
- 42: Löschmittelcontainer
- 44: Löschmittelleitungssystem
- 45: Löschmittelleitung
- 46: Pumpeinrichtung
- 48: Belüftungssystem
- 50: Heizeinrichtung
- 52: Flüssigkeitsbefüllsystem
- 53: Einfüllstutzen
- 54: System zur Zugabe von Feuerlöschmittelzusatz
- 55: Feuerlöschmittelzusatz
- 56: Kamera
- 58: Bediener-Arbeitsplatz
- 60: Steuerung
- 62: Einrichtung zum Füllen und Ablassen
- 63: Luftdrucksystem
- 64: Kompressor
- 66: Ventil
- 67: Mensch-Maschine-Schnittstelle
- 68: Pumpe
- 70: Anschlussleitungen
- 72: Vorratsbehälter
- 74: Ablassrohr
- 76: Anstellwinkel
- 80: Passagierflugzeug
- 82: Tankflugzeug

## Patentansprüche

1. Verwendung eines Passagierflugzeugs (10), das eine Passagierkabine (14) mit wenigstens zwanzig Passagiersitzen (16) und ein Frachtdeck (18) aufweist und ein Typ aus einer Flugzeugbaureihe ist, die auch ein Langstreckenflugzeug aufweist, bei dem ein dauerhaft zusätzlich installierter Mitteltank zur Reichweitenverlängerung vorgesehen ist, als Feuerlöschflugzeug (20), wobei der Mitteltank als dauerhaft installierter Löschmitteltank (24) zur Aufnahme von Löschmittel (26) zur Brandbekämpfung von Großbränden (22) verwendet wird und wobei das Passagierflugzeug (10) wenigstens eine mit dem Löschmitteltank (24) verbundene Löschmitteldüse (28) zum Ablassen des Löschmittels (26) über dem Großbrand (22) aufweist.

2. Verwendung nach Anspruch 1, **gekennzeichnet durch** wenigstens eines oder mehrere der Merkmale,
dass der Löschmitteltank (24)
2.1 unterhalb der Passagierkabine (14) untergebracht ist,
2.2 in einem Bereich eines Rumpfes (12) des Passagierflugzeugs (10) untergebracht ist, der sich von den Tragflügeln (34) bis zu einem hinteren Frachtraum (36) des Frachtdecks (18) erstreckt,
2.3 ein Tankvolumen von wenigstens 600 I aufweist,
2.4. ein Tankvolumen zwischen 1000 I und 20.000 I aufweist,
2.5 ein Löschwassertank zur Aufnahme von Löschwasser als Löschmittel (26) ist,
2.6 ein Rear-Center-Tank des Passagierflugzeugs (10) ist.

3. Verwendung nach einem der voranstehenden Ansprüche, **gekennzeichnet durch** wenigstens eines oder mehrere der Merkmale,
dass das Frachtdeck (18)
3.1 mehrere Aufnahmeplätze (38) zur Aufnahme und Verankerung weiterer mobiler Löschmittelcontainer (42) aufweist,
3.2 mehrere weitere entfernbar verankerte Löschmittelcontainer (42) aufweist, die mit dem Löschmitteltank (24) in Fluidverbindung stehen oder in Fluidverbindung bringbar sind,
3.3 einen vorderen Frachtraum (32) vor dem Löschmitteltank (24) und einen hinteren Frachtraum (36) hinter dem Löschmitteltank (24) aufweist,
3.4. zur Aufnahme und Verankerung von einem bis zwanzig Löschmittelcontainer (42) mit je einem Löschmittelvolumen von 400 I bis 4000 I ausgebildet ist,
3.5 Löschmittelleitungen (45) aufweist, die an Löschmittelcontainer (42) anschließbar sind und mit dem Löschmitteltank (24) und/oder der Löschmitteldüse (28) verbunden sind.

4. Verwendung nach einem der voranstehenden Ansprüche, **gekennzeichnet durch** wenigstens eines oder mehrere der Merkmale,
dass die Passagierkabine (14)
4.1 10 bis 50 Reihen Passagiersitze (16) aufweist,
4.2 als Single-Aisle-Passagierkabine ausgebildet ist.

5. Verwendung nach einem der voranstehenden Ansprüche, **dadurch gekennzeichnet,**
**dass** das Passagierflugzeug (10) wenigstens eines oder mehrere der folgenden Merkmale hat:
5.1 wenigstens eine Kamera (56) zur Beobachtung des Bereichs unterhalb des Passagierflugzeugs (10),
5.2 wenigstens einen Bediener-Arbeitsplatz (58) für eine Bedienperson mit einer Mensch-Maschine-Schnittstelle (67) zur Bedienung einer die Löschmitteldüse (28) und den Löschmitteltank (24) umfassenden Feuerlöschflugzeugausrüstung (40) des Passagierflugzeugs (10);
5.3 eine Pumpeinrichtung (46) zum Transport von Löschmittel (26) von und zu dem Löschmitteltank (24) und/oder zu der wenigstens einen Löschmitteldüse (28),
5.4 ein Belüftungssystem (48) zum Nachführen von Luft bei Ablassen des Löschmittels (26),
5.6 einen oder mehrere als Unit-Load-Device ausgebildete zusätzliche Löschmittelcontainer (42),
5.7 ein Löschmittelleitungssystem (44) mit Rohrleitungen (45, 74) und Ventilen (66) zum Ablassen von Löschmittel (26) und Transport von Löschmittel (26) zu dem Löschmitteltank (24),
5.8 eine Heizeinrichtung (50) für den Löschmitteltank (24) und/oder das Frachtdeck (18),
5.9 ein Flüssigkeitsbefüllsystem (52) zum Befüllen des Löschmitteltanks (24),
5.10 ein Luftdrucksystem (63) zum Steuern des Drucks in dem Löschmitteltank (24),
5.11 einen Feuerlöschmittelzusatz (55),
5.12 ein System (54) zur Zugabe eines Feuerlöschmittelzusatzes.

6. Verwendung nach einem der voranstehenden Ansprüche, **gekennzeichnet durch** wenigstens eines oder mehrere der folgenden Merkmale, dass die Löschmitteldüse (28)
6.1 unterhalb des Rumpfes (12) nach außen mündet,
6.2 hinter den Tragflächen (34) angeordnet ist,
6.3 ein Ventil (66) zum Öffnen und Schließen aufweist,
6.4 durch eine Ablassrohr (74) gebildet wird,
6.5 zum Ablassen des Inhalts des Löschmitteltanks (24) oder des Löschmitteltanks (24) und eventueller zusätzlicher Löschmittelcontainer (42) in einem Schuss ausgebildet ist.

7. Betriebsverfahren für ein Passagierflugzeug (10), das eine Passagierkabine (14) mit wenigstens zwanzig Passagiersitzen (16) und ein Frachtdeck (18) aufweist und ein Typ aus einer Flugzeugbaureihe ist, die auch ein Langstreckenflugzeug aufweist, bei dem ein dauerhaft zusätzlich installierter Mitteltank zur Reichweitenverlängerung vorgesehen ist, wobei der dauerhaft zusätzlich installierte Mitteltank bei dem Passagierflugzeug (10) als Löschmitteltank (24) zur Brandbekämpfung verwendet wird, wobei das Passagierflugzeug (10) wenigstens eine mit dem Löschmitteltank (24) verbundene Löschmitteldüse (28) zum Ablassen des Löschmittels (26) über dem Großbrand (22) aufweist, wobei das Betriebsverfahren die Schritte umfasst:
Betreiben des Passagierflugzeugs (10) als Verkehrsflugzeug für den Transport von Passagieren im Normalbetrieb,
und im Fall eines Großbrandes, Befüllen des Löschmitteltanks (24) mit Löschmittel (26) und Betreiben des Passagierflugzeugs (10) als Feuerlöschflugzeug (20).

8. Betriebsverfahren nach Anspruch 7 oder Verwendung nach einem der Ansprüche 1 bis 6, wobei zum Betrieb des Passagierflugzeugs (10) als Feuerlöschflugzeug (20) wenigstens ein zusätzlicher Löschmittelcontainer (42) in wenigstens einem Frachtraum (32, 36) des Passagierflugzeugs (10) installiert wird.

9. Betriebsverfahren oder Verwendung nach Anspruch 8, wobei das Löschmittel (26) gemäß einer der folgenden Betriebsweisen abgelassen wird:
a) Ablassen des Inhalts des Löschmitteltanks (24) in einem Schuss,
b) Ablassen des Inhalts des Löschmitteltanks (24) und des wenigstens einen zusätzlichen Löschmittelcontainers (42) in einem Schuss,
c) Ablassen des Inhalts des Löschmitteltanks (24) in einem ersten Schuss, Pumpen weiteren Löschmittels (26) aus dem wenigstens einen zusätzlichen Löschmittelcontainer (42) in den Löschmitteltank (24) und dann Ablassen des nachgefüllten Inhalts des Löschmitteltanks (24) in einem zweiten Schuss.

10. Passagierflugzeugbaureihe umfassend mehrere Passagierflugzeuge (10, 80) mit gleichem Außenaufbau einschließlich Rumpf (12), Fahrwerk, Tragflügeln (34) und Leitwerk, wobei in dem gleichen Rumpf (12) jeweils eine Passagierkabine (14) zur Aufnahme von Passagiersitzen (16), ein Frachtdeck (18) und ein von Kontur, Anordnung und Abmaßen gleicher Mitteltank angeordnet ist, wobei die Passagierflugzeugbaureihe ein Langstrecken-Passagierflugzeug mit verlängerter Reichweite umfasst, bei dem der Mitteltank zur Nutzung als zusätzlicher Treibstofftank ausgebildet ist, und ein zusätzlich als Feuerlöschflugzeug (20) nutzbares Passagierflugzeug (10), bei dem die Passagierkabine (14) wenigstens zwanzig Passagiersitzen (16) hat und bei dem der Mitteltank ein dauerhaft installierter Löschmitteltank (24) zur Aufnahme von Löschmittel (26) zur Brandbekämpfung von Großbränden (22) ist und das wenigstens eine mit dem Löschmitteltank (26) verbundene Löschmitteldüse (28) zum Ablassen des Löschmittels (26) über dem Großbrand (22) aufweist.

11. Passagierflugzeugbaureihe nach Anspruch 10, umfassend
11.1 ein zusätzlich als Tankflugzeug (82) nutzbares Passagierflugzeug (80), bei dem der Mitteltank als Flüssigkeitstank (24') zur Lieferung von Flüssigkeit von einer Versorgungsstelle zu einer entlegenen Station ausgebildet ist und/oder
11.2 ein Kurz- oder Mittelstrecken-Passagierflugzeug, das den anderen Passagierflugzeugen (10, 80), jedoch ohne den zusätzlichen Mitteltank, entspricht.

12. Passagierflugzeugbaureihe nach Anspruch 10 oder 11, ausgebildet als Schmalrumpfflugzeugbaureihe.

## Claims

1. Use of a passenger aircraft (10), which comprises a passenger cabin (14) with at least twenty passenger seats (16) and a cargo deck (18) and is a type from an aircraft series which also comprises a long-haul aircraft, in which a permanently additionally installed centre tank for range extension is provided, as a firefighting aircraft (20), wherein the centre tank is used as a permanently installed extinguishing agent tank (24) for receiving extinguishing agent (26) for firefighting major fires (22) and wherein the passenger aircraft (10) comprises at least one extinguishing agent nozzle (28), connected to the extinguishing agent tank (24), for discharging the extinguishing agent (26) over the major fire (22).

2. Use according to Claim 1, **characterized by** at least one or more of the features,
that the extinguishing agent tank (24)
2.1 is accommodated below the passenger cabin (14),
2.2 is accommodated in a region of a fuselage (12) of the passenger aircraft (10) that extends from the wings (34) as far as a rear cargo hold (36) of the cargo deck (18),
2.3 has a tank volume of at least 600 1,
2.4. has a tank volume of between 1000 1 and 20 000 1,
2.5 is an extinguishing water tank for receiving extinguishing water as extinguishing agent (26),
2.6 is a rear centre tank of the passenger aircraft (10) .

3. Use according to either of the preceding claims, **characterized by** at least one or more of the features, that the cargo deck (18)
3.1 has multiple receiving spaces (38) for receiving and anchoring further mobile extinguishing agent containers (42),
3.2 has multiple further extinguishing agent containers (42) which are anchored in a removable manner and are in or able to be brought into fluidic connection with the extinguishing agent tank (24),
3.3 has a front cargo hold (32) in front of the extinguishing agent tank (24) and a rear cargo hold (36) behind the extinguishing agent tank (24),
3.4. is designed to receive and anchor from one to twenty extinguishing agent containers (42) each having an extinguishing agent volume of 400 1 to 4000 1,
3.5 has extinguishing agent lines (45) which are connectable to extinguishing agent containers (42) and are connected to the extinguishing agent tank (24) and/or to the extinguishing agent nozzle (28).

4. Use according to one of the preceding claims, **characterized by** at least one or more of the features, that the passenger cabin (14)
4.1 has 10 to 50 rows of passenger seats (16),
4.2 is in the form of a single-aisle passenger cabin.

5. Use according to one of the preceding claims, **characterized in that** the passenger aircraft (10) has at least one or more of the following features:
5.1 at least one camera (56) for observing the region below the passenger aircraft (10),
5.2 at least one operator workstation (58) for an operator with a human-machine interface (67) for operating firefighting aircraft equipment (40) of the passenger aircraft (10), including the extinguishing agent nozzle (28) and the extinguishing agent tank (24);
5.3 a pumping device (46) for transporting extinguishing agent (26) from and to the extinguishing agent tank (24) and/or to the at least one extinguishing agent nozzle (28),
5.4 a ventilation system (48) for feeding air once the extinguishing agent (26) has been discharged,
5.6 one or more additional extinguishing agent containers (42) in the form of unit load devices,
5.7 an extinguishing agent line system (44) with pipes (45, 74) and valves (66) for discharging extinguishing agent (26) and transporting extinguishing agent (26) to the extinguishing agent tank (24),
5.8 a heating device (50) for the extinguishing agent tank (24) and/or the cargo deck (18),
5.9 a liquid filling system (52) for filling the extinguishing agent tank (24),
5.10 an air pressure system (63) for controlling the pressure in the extinguishing agent tank (24),
5.11 a fire-extinguishing agent additive (55),
5.12 a system (54) for adding a fire-extinguishing agent additive.

6. Use according to one of the preceding claims, **characterized by** at least one or more of the following features, that the extinguishing agent nozzle (28)
6.1 opens outwards below the fuselage (12),
6.2 is arranged behind the wings (34),
6.3 has a valve (66) for opening and closing,
6.4 is formed by a discharge tube (74),
6.5 is designed to discharge the contents of the extinguishing agent tank (24) or of the extinguishing agent tank (24) and any additional extinguishing agent containers (42) in one shot.

7. Operating method for a passenger aircraft (10), which comprises a passenger cabin (14) with at least twenty passenger seats (16) and a cargo deck (18) and is a type from an aircraft series which also comprises a long-haul aircraft, in which a permanently additionally installed centre tank for range extension is provided, wherein the permanently additionally installed centre tank in the passenger aircraft (10) is used as an extinguishing agent tank (24) for firefighting, wherein the passenger aircraft (10) comprises at least one extinguishing agent nozzle (28), connected to the extinguishing agent tank (24), for discharging the extinguishing agent (26) over the major fire (22), wherein the operating method comprises the steps:
operating the passenger aircraft (10) as a commercial aircraft for the transport of passengers in normal operation,
and in the case of a major fire, filling the extinguishing agent tank (24) with extinguishing agent (26) and operating the passenger aircraft (10) as a firefighting aircraft (20).

8. Operating method according to Claim 7 or use according to one of Claims 1 to 6, wherein, for operating the passenger aircraft (10) as a firefighting aircraft (20), at least one additional extinguishing agent container (42) is installed in at least one cargo hold (32, 36) of the passenger aircraft (10).

9. Operating method or use according to Claim 8, wherein the extinguishing agent (26) is discharged according to one of the following operating modes:
a) discharging the contents of the extinguishing agent tank (24) in one shot,
b) discharging the contents of the extinguishing agent tank (24) and of the at least one additional extinguishing agent container (42) in one shot,
c) discharging the contents of the extinguishing agent tank (24) in a first shot, pumping further extinguishing agent (26) out of the at least one additional extinguishing agent container (42) into the extinguishing agent tank (24) and then discharging the refilled contents of the extinguishing agent tank (24) in a second shot.

10. Passenger aircraft series comprising multiple passenger aircraft (10, 80) with the same external structure including fuselage (12), landing gear, wings (34) and tail unit, wherein in each case a passenger cabin (14) for receiving passenger seats (16), a cargo deck (18) and a centre tank of the same contour, arrangement and dimensions are arranged in the same fuselage (12), wherein the passenger aircraft series comprises a long-haul passenger aircraft with extended range, in which the centre tank is designed for use as an additional fuel tank, and a passenger aircraft (10) which is additionally usable as a firefighting aircraft (20), in which the passenger cabin (14) has at least twenty passenger seats (16) and in which the centre tank is a permanently installed extinguishing agent tank (24) for receiving extinguishing agent (26) for firefighting major fires (22), and comprises the at least one extinguishing agent nozzle (28), connected to the extinguishing agent tank (26), for discharging the extinguishing agent (26) over the major fire (22).

11. Passenger aircraft series according to Claim 10, comprising
11.1 a passenger aircraft (80) which is additionally usable as a tanker aircraft (82) and in which the centre tank is designed as a liquid tank (24') for delivering liquid from a supply point to a remote station, and/or
11.2 a short-haul or medium-haul passenger aircraft which corresponds to the other passenger aircraft (10, 80), but without the additional centre tank.

12. Passenger aircraft series according to Claim 10 or 11, designed as a narrow-body aircraft series.

## Revendications

1. Utilisation en tant qu'avion anti-incendie (20) d'un avion de ligne (10) qui présente une cabine des passagers (14) pourvue d'au moins vingt sièges de passager (16) et d'un pont de chargement (18), et qui est un type issu d'une gamme d'avions présentant également un avion long-courrier dans lequel un réservoir central installé à demeure en plus pour augmenter la portée est prévu, dans laquelle le réservoir central est utilisé en tant que réservoir d'agent extincteur (24) installé à demeure, destiné à recevoir un agent extincteur (26) pour la lutte contre le feu des grands incendies (22), et dans laquelle un avion de ligne (10) présente au moins une buse d'agent extincteur (28), reliée au réservoir d'agent extincteur (24) pour décharger l'agent extincteur (26) au-dessus du grand incendie (22).

2. Utilisation selon la revendication 1, **caractérisée par** au moins une ou plusieurs des particularités consistant
à ce que le réservoir d'agent extincteur (24)
2.1 est logé sous la cabine des passagers (14),
2.2 est logé dans une zone d'un fuselage (12) de l'avion de ligne (10) qui s'étend des ailes portantes (34) jusqu'à une soute arrière (36) du pont de chargement (18),
2.3 présente un volume de réservoir d'au moins 600 1,
2.4 présente un volume de réservoir compris entre 1000 1 et 20 000 1,
2.5 est un réservoir d'eau d'extinction, destiné à recevoir de l'eau d'extinction en tant qu'agent extincteur (26),
2.6 est un réservoir central arrière de l'avion de ligne (10) .

3. Utilisation selon l'une quelconque des revendications précédentes, **caractérisée par** au moins une ou plusieurs des particularités consistant ce que le pont de chargement (18)
3.1 présente plusieurs emplacements de réception (38) pour recevoir et ancrer des conteneurs d'agent extincteur mobiles supplémentaires (42),
3.2 présente plusieurs conteneurs d'agent extincteur supplémentaires (42) ancrés de manière amovible qui sont en communication fluidique ou peuvent être mis en communication fluidique avec le réservoir d'agent extincteur (24),
3.3 présente une soute avant (32) devant le réservoir d'agent extincteur (24) et une soute arrière (36) derrière le réservoir d'agent extincteur (24),
3.4 est réalisé pour recevoir et ancrer entre un et vingt conteneurs d'agent extincteur (42) ayant respectivement un volume d'agent extincteur de 400 1 à 4 000 1,
3.5 présente des conduites d'agent extincteur (45) qui peuvent être raccordées à des conteneurs d'agent extincteur (42) et qui sont reliées au réservoir d'agent extincteur (24) et/ou à la buse d'agent extincteur (28).

4. Utilisation selon l'une quelconque des revendications précédentes, **caractérisée par** au moins une ou plusieurs des particularités consistant à ce que la cabine des passagers (14)
4.1 présente entre 10 et 50 rangées de sièges de passager (16),
4.2 est réalisée sous la forme d'une cabine des passagers à couloir unique.

5. Utilisation selon l'une quelconque des revendications précédentes, **caractérisée en ce que** l'avion de ligne (10) présente au moins une ou plusieurs des particularités suivantes :
5.1 au moins une caméra (56) pour observer la zone sous l'avion de ligne (10),
5.2 au moins un poste de travail d'opérateur (58) pour un opérateur, pourvu d'une interface homme-machine (67) pour commander un équipement d'avion anti-incendie (40) comprenant la buse d'agent extincteur (28) et le réservoir d'agent extincteur (24) de l'avion de ligne (10) ;
5.3 un dispositif de pompage (46) pour transporter un agent extincteur (26) à destination et en provenance du réservoir d'agent extincteur (24) et/ou à destination et en provenance de ladite au moins une buse d'agent extincteur (28),
5.4 un système de ventilation (48) pour rajouter de l'air lorsque l'agent extincteur (26) est déchargé,
5.6 un ou plusieurs conteneurs d'agent extincteur supplémentaires (42) réalisés sous de forme de conteneurs de type LD3,
5.7 un système de conduites d'agent extincteur (44) pourvu de canalisations (45, 74) et de vannes (66) pour décharger l'agent extincteur (26) et pour transporter l'agent extincteur (26) jusqu'au réservoir d'agent extincteur (24),
5.8 un dispositif de chauffage (50) pour le réservoir d'agent extincteur (24) et/ou le pont de chargement (18), 5.9 un système de remplissage par liquide (52) pour remplir le réservoir d'agent extincteur (24),
5.10 un système à air comprimé (63) pour commander la pression dans le réservoir d'agent extincteur (24),
5.11 un additif d'agent extincteur (55),
5.12 un système (54) pour ajouter un additif d'agent extincteur.

6. Utilisation selon l'une quelconque des revendications précédentes, **caractérisée par** au moins une ou plusieurs des particularités suivantes consistant à ce que la buse d'agent extincteur (28)
6.1 débouche à l'extérieur sous le fuselage (12),
6.2 est disposée derrière les surfaces portantes (34),
6.3 présente une vanne (66) d'ouverture et de fermeture,
6.4 est formée par un tube de décharge (74),
6.5 est réalisée pour décharger en une seule opération le contenu du réservoir d'agent extincteur (24) ou du réservoir d'agent extincteur (24) et des conteneurs d'agent extincteur supplémentaires (42) éventuels.

7. Procédé d'exploitation pour un avion de ligne (10) qui présente une cabine des passagers (14) pourvue d'au moins vingt sièges de passager (16) et d'un pont de chargement (18) et qui est un type issu d'une gamme d'avions présentant également un avion long-courrier dans lequel un réservoir central installé en plus à demeure est prévu pour augmenter la portée, dans lequel le réservoir installé en plus à demeure est utilisé sur l'avion de ligne (10) en tant que réservoir d'agent extincteur (24) pour la lutte contre le feu, dans lequel un avion de ligne (10) présente au moins une buse d'agent extincteur (28) reliée au réservoir d'agent extincteur (24) pour décharger l'agent extincteur (26) au-dessus du grand incendie (22), dans lequel le procédé d'exploitation comprend les étapes consistant à :
exploiter l'avion de ligne (10) en tant qu'avion commercial pour le transport de passagers en exploitation normale,
et dans le cas d'un grand incendie, remplir le réservoir d'agent extincteur (24) d'un agent extincteur (26) et
exploiter l'avion de ligne (10) en tant qu'avion anti-incendie (20).

8. Procédé d'exploitation selon la revendication 7 ou utilisation selon l'une quelconque des revendications 1 à 6, dans lequel ou laquelle au moins un conteneur d'agent extincteur supplémentaire (42) est installé dans au moins une soute (32, 36) de l'avion de ligne (10) pour l'exploitation de l'avion de ligne (10) en tant qu'avion anti-incendie (20).

9. Procédé d'exploitation ou utilisation selon la revendication 8, dans lequel ou laquelle l'agent extincteur (26) est déchargé selon l'un des modes de fonctionnement suivants :
a) décharger le contenu du réservoir d'agent extincteur (24) en une seule opération,
b) décharger le contenu du réservoir d'agent extincteur (24) et dudit au moins un conteneur d'agent extincteur supplémentaire (42) en une seule opération,
c) décharger le contenu du réservoir d'agent extincteur (24) en une première opération, pomper plus d'agent extincteur (26) à partir dudit au moins un conteneur d'agent extincteur supplémentaire (42) dans le réservoir d'agent extincteur (24), et ensuite décharger le contenu rajouté du réservoir d'agent extincteur (24) en une deuxième opération.

10. Gamme d'avions de ligne, comprenant plusieurs avions de ligne (10, 80) ayant la même structure extérieure, y compris le fuselage (12), le train d'atterrissage, les ailes portantes (34) et l'empennage, dans laquelle respectivement une cabine des passagers (14) pour recevoir des sièges de passager (16), un pont de chargement (18) et un réservoir central identique en contour, agencement et dimensions sont disposés dans le même fuselage (12), dans laquelle la gamme d'avions de ligne comprend un avion de ligne long-courrier à portée augmentée dans lequel le réservoir central est réalisé pour être utilisé en tant que réservoir de carburant supplémentaire, et un avion de ligne (10) pouvant en plus être utilisé en tant qu'avion anti-incendie (20), dans lequel la cabine des passagers (14) présente au moins vingt sièges de passager (16) et dans lequel le réservoir central est un réservoir d'agent extincteur (24) installé à demeure pour recevoir un agent extincteur (26) pour la lutte contre le feu des grands incendies (22), et qui présente au moins une buse d'agent extincteur (28) reliée au réservoir d'agent extincteur (26) pour décharger l'agent extincteur (26) au-dessus du grand incendie (22).

11. Gamme d'avions de ligne selon la revendication 10, comprenant
11.1 un avion de ligne (80) pouvant en plus être utilisé en tant qu'avion ravitailleur (82), dans lequel le réservoir central est réalisé en tant que réservoir de liquide (24') pour fournir un liquide d'un point d'alimentation à une station distante, et/ou
11.2 un avion de ligne court ou moyen-courrier qui correspond aux autres avions de ligne (10, 80) mais sans le réservoir central supplémentaire.

12. Gamme d'avions de ligne selon la revendication 10 ou 11, réalisée sous la forme d'une gamme d'avions à fuselage étroit.
